# FASCICULE DE BREVET EUROPEEN

(11) **EP 1 040 080 B1**
(45) Date de publication et mention de la délivrance du brevet: **26.11.2003**
(21) Numéro de dépôt: 99943014.3
(22) Date de dépôt: 21.09.1999
(51) Int. Cl.: C01B 17/04, B01J 23/85, B01J 27/224

(54) **PROCEDE POUR OXYDER DIRECTEMENT EN SOUFRE, PAR VOIE CATALYTIQUE ET EN PHASE VAPEUR, L'H 2?S CONTENU A FAIBLE TENEUR DANS UN GAZ**
VERFAHREN ZUR DIREKTEN, KATALYTISCHEN OXIDATION DES GERINGEN H2S-GEHALTES EINES GASES ZU SCHWEFEL
METHOD FOR DIRECT OXIDATION IN SULPHUR, BY CATALYTIC PROCESS AND IN VAPOUR PHASE, OF LOW CONTENT H 2?S IN A GAS

(30) Priorité: 24.09.1998 FR 9811941
(43) Date de publication de la demande: 04.10.2000
(73) Titulaire: Elf Exploration Production, 92400 Courbevoie (FR)
(72) Inventeur: LEDOUX, Marc, F-67000 Strasbourg (FR); NOUGAYREDE, Jean, F-64000 Strasbourg (FR); PHAM-HUU, Cuong, F-67700 Saverne (FR); KELLER, Nicolas, F-67100 Strasbourg (FR); SAVIN-PONCET, Sabine, F-64160 Buros (FR); CROUZET, Claude, F-67000 Strasbourg (FR)
(74) Mandataire: Cabinet Hirsch
(86) Numéro de dépôt international: FR9902237
(87) Numéro de publication internationale: WO00017099

(56) Documents cités:
- EP-A- 0 134 593
- WO-A-99/33748
- DD-A- 129 037
- FR-A- 2 727 101
- GB-A- 1 307 716
- US-A- 4 311 683

## Description

L'invention se rapporte à un procédé pour oxyder directement en soufre, par voie catalytique et en phase vapeur, l'H₂S contenu à faible teneur dans un gaz.

Pour récupérer l'H₂S contenu à faible teneur, à savoir teneur inférieure à 25% en volume et plus particulièrement comprise entre 0,001% et 20% et tout spécialement allant de 0, 005% à 10% en volume, dans des gaz de provenances diverses, on peut faire appel, notamment, à des procédés mettant en oeuvre une oxydation catalytique directe de l'H₂S en soufre selon la réaction H₂S + 1/2 O₂ → S + H₂O.

Dans de tels procédés, on fait passer le gaz à traiter renfermant l'H₂S en mélange avec une quantité appropriée d'un gaz contenant de l'oxygène libre, par exemple, air, oxygène ou encore air enrichi en oxygène, au contact d'un catalyseur d'oxydation de l'H₂S en soufre en réalisant ce contact à des températures soit supérieures au point de rosée du soufre formé, auquel cas le soufre formé est présent à l'état de vapeur dans le milieu réactionnel issu de la réaction, ou bien à des températures inférieures au point de rosée du soufre formé, auquel cas ledit soufre se dépose sur le catalyseur, ce qui nécessite de régénérer périodiquement le catalyseur chargé de soufre en vaporisant le soufre par balayage au moyen d'un gaz non oxydant ayant une température comprise entre 200°C et 500°C.

En particulier, l'oxydation de l'H₂S en soufre à des températures supérieures au point de rosée du soufre, c'est-à-dire à des températures supérieures à environ 180°C, peut être réalisée au contact d'un catalyseur consistant en oxyde de titane (EP-A-0078690), en oxyde de titane renfermant un sulfate de métal alcalino-terreux (WO-A-8302068), en oxyde de titane renfermant de l'oxyde de nickel et éventuellement de l'oxyde d'aluminium (EP-A-0140045), en un oxyde du type oxyde de titane, oxyde de zirconium ou silice associé à un ou plusieurs composés de métaux de transition choisis parmi Fe, Cu, Zn, Cd, Cr, Mo, W, Co et Ni, de préférence Fe, et éventuellement à un ou plusieurs composés de métaux précieux choisis parmi Pd, Pt, Ir et Rh, de préférence Pd (FR-A-2511663), ou encore en une alumine stabilisée thermiquement et associée à un ou plusieurs composés de métaux de transition tels que précités, notamment Fe, et éventuellement à un ou plusieurs composés de métaux précieux choisis parmi Pd, Pt, Ir et Rh (FR-A-2540092).

Les catalyseurs tels que précités constitués d'une phase catalytique à base d'au moins un oxyde, sel ou sulfure d'un métal de transition associée à un support consistant en au moins un matériau choisi parmi l'alumine, l'oxyde de titane, l'oxyde de zirconium, la silice, les zéolithes, les mélanges silice/alumine, les mélanges silice/oxyde de titane et le charbon actif, qui sont utilisés pour l'oxydation catalytique de l'H₂S en soufre, présentent encore certaines insuffisances à l'usage prolongé. En particulier, les catalyseurs dont le support est à base d'alumine sont susceptibles d'évoluer dans le temps par sulfatation. En ce qui concerne les catalyseurs dont le support consiste en charbon actif, des précautions doivent être prises lors de leur mise en oeuvre pour éviter l'oxydation du support, qui s'accompagne d'une perte dudit support. De plus, pour ces divers catalyseurs, la phase catalytique imprégnant le support a tendance à migrer dans la maille du support, ce qui rend difficile voire même souvent impossible la récupération du métal de la phase catalytique dans le catalyseur usé. Enfin, les catalyseurs précités ont une conductibilité thermique médiocre, ce qui ne permet pas de réaliser un contrôle efficace de la température au sein des lits catalytiques les contenant par un échange thermique avec un fluide de refroidissement.

Afin de remédier aux inconvénients des catalyseurs du type mentionné plus haut, qui sont utilisés dans les procédés d'oxydation catalytique directe de l'H₂S en soufre opérant en phase vapeur, c'est-à-dire aux températures supérieures au point de rosée du soufre formé, et ainsi d'obtenir un procédé conduisant à une sélectivité améliorée en soufre se maintenant d'une manière durable dans le temps, la demanderesse, dans les citations FR-A-2727101 et WO-A-9719019, a proposé de réaliser ladite oxydation au contact d'un catalyseur formé d'un support en carbure de silicium associé à une phase catalytiquement active renfermant au moins un métal de transition, notamment Ni, Co, Fe, Cu, Ag, Mn, Mo, Cr, Ti, W et V, sous la forme d'oxyde ou de sel ou/et à l'état élémentaire.

En poursuivant ses recherches, la demanderesse a trouvé que l'on pouvait encore améliorer l'activité désulfurante et la sélectivité en soufre du catalyseur à support de carbure de silicium dans le procédé d'oxydation directe de l'H₂S en soufre, mis en oeuvre à des températures supérieures au point de rosée du soufre formé, en effectuant ladite oxydation avec une phase active dudit catalyseur, qui consiste en un ou plusieurs oxysulfures de certains des métaux de transition mentionnés plus haut.

L'invention a donc pour objet un procédé pour oxyder directement en soufre, par voie catalytique, l'H₂S contenu à faible teneur dans un gaz, lequel procédé est du type dans lequel on fait passer ledit gaz renfermant H₂S avec un gaz renfermant de l'oxygène libre, en quantité propre à fournir un rapport molaire O₂ : H₂S allant de 0, 05 à 15, au contact d'un catalyseur d'oxydation sélective de l'H₂S en soufre, qui est constitué d'une phase catalytiquement active associée à un support à base de carbure de silicium et formée d'au moins un composé d'au moins un métal de transition, en opérant à des températures supérieures au point de rosée du soufre formé lors de l'oxydation de l'H₂S, et il se caractérise en ce que la phase active du catalyseur est constituée d'au moins un oxysulfure d'au moins un métal choisi parmi fer, cuivre nickel, cobalt, chrome, molybdène et tungstène.

Avantageusement, le métal constituant, sous la forme oxysulfure, la phase active du catalyseur d'oxydation, est le fer ou un mélange de fer et d'au moins l'un des métaux cuivre, nickel, cobalt, chrome, molybdène ou tungstène, ledit mélange étant de préférence à majorité de fer.

Comme indiqué ci-dessus, la réaction d'oxydation de l'H₂S en soufre est mise en oeuvre à des températures supérieures au point de rosée du soufre produit et plus particulièrement à des températures supérieures à 180°C et pouvant aller jusqu'à 500°C. De préférence, la réaction d'oxydation de l'H₂S en soufre est réalisée à des températures comprises entre 190°C et 300°C et plus spécialement entre 200°C et 260°C .

La phase active du catalyseur d'oxydation, comptée en poids de métal, représente le plus souvent 0,1% à 20%, plus particulièrement 0,2% à 15% et plus spécialement 0,2% à 7% du poids dudit catalyseur.

Le support en carbure de silicium constitue avantageusement au moins 40 % et plus particulièrement au moins 50 % du poids du catalyseur d'oxydation.

La surface spécifique du catalyseur d'oxydation de l'H₂S en soufre peut varier assez largement selon les conditions de mise en oeuvre du procédé d'oxydation. Avantageusement, ladite surface spécifique, déterminée par la méthode BET d'absorption d'azote à la température de l'azote liquide (norme NF X 11-621), peut représenter 0,05 m²/g à 600 m²/g et plus particulièrement 0, 1 m²/g à 400 m²/g.

Le catalyseur d'oxydation à support de carbure de silicium et à phase active oxysulfure peut être préparé en opérant, par exemple, comme suit. Dans une première étape, on prépare un précurseur oxydé du catalyseur en réalisant tout d'abord une imprégnation d'un support en carbure de silicium, se présentant sous la forme de poudre, de pastilles, de granulés, d'extrudés ou autres formes d'agglomérés, au moyen d'une solution ou d'un sol, dans un solvant tel que l'eau, du métal ou des métaux désirés pour la phase active, sous la forme de sels , puis en séchant le support ainsi imprégné et en calcinant le produit séché à des températures pouvant aller de 250°C à 500°C, en opérant ou non en atmesphère inerte. Dans une deuxième étape, on forme un précurseur sulfuré du catalyseur en soumettant le précurseur oxydé, issu de la première étape, à un traitement de sulfuration par mise en contact avec un agent sulfurant consistant en soufre élémentaire ou/et en un mélange gazeux d'H₂S et d'un gaz inerte, en opérant à des températures comprises entre 250°C et 500°C et pendant une durée suffisante pour effectuer une sulfuration maximale du métal ou des métaux de la phase active du catalyseur. Dans une troisième étape, on produit le catalyseur en mettant le précurseur sulfuré, issu de la deuxième étape, en contact, à des températures inférieures à 500°C et notamment comprises entre 250°C et 450°C et pendant une durée comprise entre 0,2 heure et 3 heures et plus spécialement entre 0,5 heure et 2 heures, avec un courant gazeux oxygéné constitué d'un gaz vecteur inerte renfermant, en volume dudit gaz inerte, 0,1% à 40% d'oxygène et 0% à 50% d'eau pour former la phase oxysulfure métallique.

La quantité de soufre élémentaire, utilisée pour la sulfuration du support imprégné calciné constituant le précurseur oxydé du catalyseur, représente avantageusement un léger excès, par exemple excès allant jusqu'à 300% molaire, par rapport à la quantité stoechiométrique correspondant à une sulfuration maximale du métal ou des métaux de la phase active du catalyseur. La durée du traitement de sulfuration par le soufre élémentaire est avantageusement comprise entre 0,5 heure et 4 heures.

Le mélange gazeux d'H₂S et de gaz inerte utilisé comme agent sulfurant renferme avantageusement entre 0,2% et 30% d'H₂S en volume. La durée du traitement de sulfuration par le mélange gazeux renfermant H₂S est généralement comprise entre 0,5 heure et 15 heures.

Selon une forme de mise en oeuvre, le courant gazeux oxygéné mis en contact avec le précurseur sulfuré du catalyseur pour former la phase oxysulfure métallique est de l'air. Selon une autre forme de mise en oeuvre, ledit courant gazeux oxygéné est constitué d'un gaz inerte, par exemple azote, argon, hélium ou mélanges d'au moins deux de ces gaz, renfermant, en volume du gaz inerte, 0,1% à 3%, plus spécialement 0,3% à 1,5%, d'oxygène et 0% à 50%, plus spécialement 0,5% à 30%, d'eau.

Le carbure de silicium utilisé pour constituer le support du catalyseur d'oxydation de l'H₂S en soufre, peut consister en l'un quelconque des carbures de silicium connus sous réserve qu'il présente les caractéristiques requises de surface spécifique, à savoir une surface spécifique, déterminée par la méthode BET d'adsorption d'azote, allant de 0,05 m²/g à 600 m²/g.

En particulier, 1 ledit carbure de silicium peut être préparé en faisant appel à l'une quelconque des techniques, qui sont décrites dans les citations EP-A-0313480 (correspondant à US-A-4914070), EP-A-0440569, EP-A-0511919, EP-A-0543751, EP-A-0543752 et FR-A-2758279.

Le gaz renfermant de l'oxygène libre utilisé pour l'oxydation, en soufre, de l'H₂S contenu dans le gaz à traiter est généralement de l'air, bien qu'il soit possible d'employer de l'oxygène pur, de l'air enrichi en oxygène ou encore des mélanges, qui sont constitués, en proportions variées, d'oxygène et d'au moins un gaz inerte et qui sont autres que l'air et l'air enrichi en oxygène.

Le gaz renfermant de l'oxygène libre et le gaz à traiter renfermant de l'H₂S peuvent être amenés séparément au contact du catalyseur d'oxydation. Toutefois, en vue d'obtenir un milieu réactionnel gazeux très homogène lors du contact avec le catalyseur, il est préférable de mélanger tout d'abord le gaz à traiter renfermant l'H₂S avec le gaz renfermant de l'oxygène libre et d'amener le mélange ainsi réalisé au contact du catalyseur d'oxydation.

Comme indiqué plus haut, le gaz renfermant de l'oxygène libre est utilisé en quantité propre à fournir un rapport molaire O₂:H₂S allant de 0,05 à 15, plus particulièrement de 0,1 à 10 dans le milieu réactionnel arrivant au contact du catalyseur d'oxydation de l'H₂S en soufre. Avantageusement, ledit rapport molaire est compris entre 2,5 et 8, ce qui stabilise la phase active oxysulfure du catalyseur.

Tout particulièrement, la réaction d'oxydation de l'H₂S en soufre est mise en oeuvre à des températures comprises entre 200°C et 260°C avec un rapport molaire O₂:H₂S allant de 3 à 7.

Les temps de contact du milieu réactionnel gazeux avec le catalyseur d'oxydation peuvent aller de 0,5 seconde à 20 secondes et de préférence de 1 seconde à 10 secondes, ces valeurs étant données dans les conditions normales de pression et de température (temps de contact TPN).

Le gaz à faible teneur en H₂S, que l'on traite par le procédé selon l'invention, peut avoir des origines diverses. En particulier, un tel gaz peut être un gaz naturel à faible teneur en H₂S ou un gaz acide résultant de la désulfuration d'un gaz naturel ou encore un gaz provenant de la gazéification du charbon ou des huiles lourdes, voire même un gaz résultant de l'hydrogénation d'un gaz résiduaire, par exemple un gaz résiduaire d'usine à soufre, renfermant des composés soufrés tels que SO₂, mercaptans, COS, CS₂ convertibles en H₂S sous l'action de l'hydrogène ou de la vapeur d'eau. Le gaz à traiter peut être encore un gaz résultant du traitement, au contact d'un catalyseur CLAUS susceptible de promouvoir la réaction de formation de soufre entre H₂S et SO₂, d'un effluent gazeux renfermant H₂S et SO₂ dans un rapport molaire H₂S:SO₂ supérieur à 2:1 et tel que ledit gaz résultant contienne surtout H₂S et pas ou très peu de SO₂ comme composés soufrés. Le procédé selon l'invention peut s'appliquer au traitement de gaz ayant une teneur en H₂S inférieure à 25% en volume et notamment comprise entre 0,001% et 20% en volume. Dans les cas les plus courants, ladite teneur est comprise entre 0,005% et 10% en volume et plus particulièrement va de 0,01% à 5% en volume. Le gaz à traiter peut encore renfermer des composés organiques du soufre tels que mercaptans, COS, CS₂, en concentration globale pouvant aller jusqu'à environ 1% en volume. On pourrait, en utilisant le procédé selon l'invention, traiter des gaz renfermant H₂S en concentration supérieure à 25% en volume, toutefois dans ce cas on utilise de préférence les procédés conventionnels de production de soufre comportant une étape de réaction thermique.

Le gaz renfermant H₂S, que l'on soumet à l'oxydation au contact du catalyseur à support de carbure de silicium, peut être exempt d'eau ou substantiellement exempt d'eau ou au contraire renfermer une quantité d'eau plus ou moins grande. Ainsi, on peut traiter selon l'invention un gaz renfermant H₂S qui a une teneur en eau pouvant aller de 0 % à environ 50%.

Dans le procédé d'oxydation catalytique de l'H₂S en soufre selon l'invention, qui est mis en oeuvre en phase vapeur, c'est-à-dire à des températures supérieures au point de rosée du soufre formé au cours de la réaction d'oxydation de l'H₂S, ledit soufre est présent à l'état de vapeur dans le milieu réactionnel, qui se trouve au contact du catalyseur et que l'on recueille à la sortie de la zone d'oxydation catalytique.

Le procédé selon l'invention peut être mis en oeuvre dans une zone unique d'oxydation renfermant le catalyseur d'oxydation, surtout lorsque la teneur en H₂S du gaz à traiter n'est pas supérieure à 5% en volume environ, ou bien dans une pluralité de zones d'oxydation disposées en série renfermant chacune le catalyseur d'oxydation, surtout lorsque la teneur en H₂S du gaz à traiter est supérieure à 5% en volume environ, ladite zone unique d'oxydation ou chacune des zones de la pluralité de zones d'oxydation opérant à des températures comprises dans les intervalles définis plus haut. Chacune des zones d'oxydation travaille dans le domaine de températures correspondant à une sélectivité sensiblement optimale du catalyseur pour la formation de soufre.

L'oxydation de l'H₂S en soufre étant très exothermique, il peut être nécessaire de refroidir le catalyseur contenu dans la zone unique d'oxydation ou dans chacune des zones de la pluralité de zones d'oxydation, pour maintenir la température dans ladite zone à la valeur désirée ou dans l'intervalle désiré correspondant à la sélectivité optimale en soufre du catalyseur. On peut, notamment, réaliser le refroidissement du catalyseur à l'aide d'un fluide froid, par exemple eau ou autre fluide, circulant en échange indirect de chaleur avec ledit catalyseur au sein de ce dernier. On peut encore opérer en plaçant le catalyseur dans un réacteur tubulaire constitué d'un ou plusieurs tubes disposés dans une calandre, avec, par exemple, le catalyseur présent dans le tube ou les tubes et un fluide froid, par exemple eau ou autre fluide, circulant dans la calandre à l'extérieur du tube ou des tubes ou vice versa.

A la sortie de la zone unique d'oxydation ou de chacune des zones de la pluralité de zones d'oxydation en série, on recueille un effluent gazeux chargé de soufre vapeur, lequel effluent gazeux, avant tout traitement subséquent d'élimination de l'H₂S, est amené à passer dans une zone de séparation du soufre dans laquelle il est débarrassé de la plus grande partie du soufre qu'il contient par condensation. Lorsque le gaz renfermant H₂S est traité par passage dans une pluralité de zones d'oxydation en série renfermant le catalyseur d'oxydation à support de carbure de silicium, on oxyde en soufre dans chacune desdites zones seulement une fraction de l'H₂S contenu dans le gaz à traiter, en injectant dans la zone concernée, de préférence en mélange avec ledit gaz amené à cette zone, la quantité appropriée du gaz renfermant de l'oxygène libre pour réaliser cette oxydation en soufre. La quantité d'H₂S soumise à l'oxydation en soufre dans chacune des zones, qui représente une fraction de la quantité totale d'H₂S dans le gaz à traiter, est comprise avantageusement entre 2% et 5% en volume du gaz à traiter et le nombre de zones catalytiques d'oxydation est choisi pour que le gaz à traiter arrivant à la zone catalytique finale renferme au plus 5% d'H₂S en volume.

Si besoin est, l'effluent gazeux, que l'on recueille en sortie de la zone unique d'oxydation ou en sortie de la zone finale de la pluralité de zones d'oxydation en série, peut être soumis à un traitement complémentaire de purification après séparation du soufre qu'il contient éventuellement, ledit traitement dépendant de la nature des composés soufrés gazeux restant dans l'effluent.

Avantageusement, le catalyseur d'oxydation de l'H₂S utilisé selon l'invention peut être formé directement, dans chaque zone d'oxydation employée pour le traitement du gaz renfermant H₂S, comme opération préalable à la mise en oeuvre de l'oxydation de l'H₂S. Pour ce faire, on dispose dans chaque zone d'oxydation un précurseur oxydé du catalyseur, préparé comme indiqué précédemment, et, en opérant directement dans la zone d'oxydation, on soumet le précurseur oxydé à un traitement de sulfuration pour produire un précurseur sulfuré et effectue ensuite un traitement oxydant du précurseur sulfuré par un courant gazeux oxygéné pour former le catalyseur à phase oxysulfure, le traitement de sulfuration et le traitement oxydant correspondant respectivement à la deuxième étape et la troisième étape de préparation du catalyseur décrites plus haut. Le traitement de sulfuration peut être réalisé, notamment, en utilisant le gaz à traiter renfermant H₂S comme agent sulfurant.

Selon l'invention, lorsque l'activité du catalyseur d'oxydation, au cours de la phase d'oxydation de l'H₂S, passe en dessous d'un seuil prédéterminé, on peut restaurer l'efficacité dudit catalyseur, c'est-à-dire son activité désulfurante et sa sélectivité en soufre, en soumettant le catalyseur désactivé à un traitement oxydant dans les conditions de la troisième étape de préparation du catalyseur décrites plus haut.

L'invention est illustrée par les exemples suivants donnés à titre non limitatif.

### EXEMPLE 1 :

On effectuait l'oxydation de l'H₂S présent dans un gaz renfermant, en volume, 0,5% d'H₂S, 20% d'H₂O et 79,5% d'azote, en opérant à une température de 240°C, avec utilisation d'un catalyseur consistant en carbure de silicium supportant une phase active comportant du fer sous la forme oxysulfure, ledit catalyseur ayant une surface spécifique BET de 20 m²/g et renfermant 5% de fer en poids.

Ledit catalyseur était obtenu en opérant comme suit :

Dans une première étape, on préparait un précurseur oxydé du catalyseur en imprégnant tout d'abord des grains de carbure de silicium, ayant un diamètre moyen de 1 mm et présentant une surface spécifique BET de 25 m²/g, à l'aide d'une quantité appropriée de nitrate de fer, en solution aqueuse, pour fournir la quantité désirée de fer dans le catalyseur résultant, puis en séchant le produit imprégné à 100°C et en calcinant le produit séché à 400°C et sous air pendant 2 heures. Dans une deuxième étape, on formait un précurseur sulfuré du catalyseur, en soumettant le précurseur oxydé, issu de la première étape, à une sulfuration par mise en contact dudit précurseur oxydé avec du soufre solide, mélangé mécaniquement au produit calciné et utilisé en quantité représentant 6,2% du poids dudit produit, laquelle mise en contact était réalisée à une température de 300°C et sous atmosphère d'hélium, pendant 2 heures. Dans une troisième étape, on produisait le catalyseur en soumettant le précurseur sulfuré, issu de la deuxième étape, à un traitement oxydant par mise en contact dudit précurseur sulfuré, à une température de 300°C et pendant 2 heures, avec un courant gazeux constitué, en volume, de 99,2% d'hélium et de 0,8% d'oxygène, pour former une phase active d'oxysulfure de fer sur le support de carbure de silicium.

Le traitement du gaz renfermant H₂S était effectué dans un réacteur catalytique pilote présentant une entrée et une sortie séparée par un lit fixe du catalyseur précité de volume égal à 100 litres, ledit réacteur étant muni, d'une part, d'un conduit d'amenée de gaz, connecté à son entrée, et, d'autre part, d'un conduit d'évacuation des gaz, connecté à sa sortie. Le conduit d'amenée de gaz comportait un piquage pour l'injection du gaz renfermant de l'oxygène libre et était en outre équipé d'un échangeur indirect de chaleur fonctionnant en réchauffeur, monté entre le piquage d'injection d'air et l'entrée du réacteur. Le conduit de sortie des gaz était équipé d'un condenseur à soufre refroidi par circulation d'eau. Le passage des gaz de l'entrée à la sortie du réacteur se faisait à travers le lit de catalyseur.

Le gaz à traiter, introduit par le conduit d'amenée des gaz avec un débit de 18 Nm³/h et une température de 40°C, recevait par le piquage, avec un débit de 24 Nm³/h, une addition d'un gaz renfermant de l'oxygène libre et constitué , en volume, de 0,8% d'oxygène et de 99,2% d'azote, ce gaz renfermant de l'oxygène libre étant injecté à température ambiante. Le mélange de gaz à traiter et de gaz renfermant de l'oxygène libre, dans lequel le rapport molaire O₂:H₂S était égal à 2,1 (4,2 fois la stoechiométrie pour l'oxydation de l'H₂S en soufre), était amené à une température de 240°C, par passage dans le réchauffeur, puis injecté dans le réacteur maintenu à cette température. Le temps de contact TPN dudit mélange avec le catalyseur contenu dans le réacteur était égal à 8,6 secondes. L'effluent gazeux sortait du réacteur, par le conduit d'évacuation des gaz, avec une température de 240°C et était refroidi à environ 130°C dans le condenseur pour en séparer le soufre qu'il contenait.

Le taux de conversion de l'H₂S, égal à 100% dans les premières heures de fonctionnement, avait encore une valeur de 96,7% après 20 heures de fonctionnement. Le rendement en soufre, égal à 94,5% après une heure de fonctionnement, avait encore une valeur de 91% après 20 heures de fonctionnement.

### EXEMPLE 2 :

On opérait comme décrit dans l'exemple 1, avec toutefois, dans la préparation du catalyseur, réalisation du traitement oxydant du précurseur sulfuré en opérant à une température de 400°C et, dans la mise en oeuvre de l'oxydation de l'H₂S du gaz à traiter, utilisation de débits de gaz à traiter et de gaz renfermant de l'oxygène libre égaux respectivement à 36 Nm³/h et 48 Nm³/h, le temps de contact TPN du mélange de gaz à traiter et de gaz renfermant de l'oxygène libre avec le catalyseur contenu dans le réacteur étant alors égal à 4,3 secondes.

Le taux de conversion de l'H₂S, égal à 100% dans les premières heures de fonctionnement, avait encore une valeur de 95,5% après 20 heures de fonctionnement. Le rendement en soufre, égal à 92,5% après deux heures de fonctionnement, avait encore une valeur de 91,6% après 20 heures de fonctionnement.

### EXEMPLE 3 :

On opérait comme décrit dans l'exemple 1, avec toutefois des débits de gaz à traiter et de gaz renfermant de l'oxygène libre égaux respectivement à 18 Nm³/h et 36 Nm³/h, le temps de contact TPN du mélange de gaz à traiter et de gaz renfermant de l'oxygène libre avec le catalyseur contenu dans le réacteur étant alors égal à 6,7 secondes et le rapport molaire O₂:H₂S égal à 3,2 (6,4 fois la stoechiométrie pour l'oxydation de l'H₂S en soufre).

La conversion de l'H₂S était pratiquement totale jusqu'à environ 50 heures de fonctionnement, puis décroissait légèrement pour se stabiliser à une valeur de 98% après 70 heures de fonctionnement, cette valeur étant encore observée après 100 heures de fonctionnement. De même, le rendement en soufre égal à 95,6% après une durée de fonctionnement de 60 heures, diminuait légèrement ensuite pour atteindre 94,5% après 75 heures de fonctionnement et 93,7% après 100 heures de fonctionnement.

### EXEMPLE 4 :

En faisant usage d'un dispositif analogue à celui employé dans l'exemple 1, on effectuait l'oxydation de l'H₂S présent dans un gaz renfermant, en volume, 4% d'H₂S, 15% d'H₂O et 81% d'azote, en opérant à une température de 240°C, avec utilisation d'un catalyseur consistant en carbure de silicium supportant une phase active comportant du fer sous la forme oxysulfure. Ledit catalyseur se présentant sous la forme de granulés ayant 1 mm de diamètre et 5 mm de longueur et une surface spécifique BET de 30 m²/g et il renfermait 5% de fer en poids.

Ledit catalyseur était obtenu en opérant comme suit :

Dans une première étape, on préparait un précurseur oxydé du catalyseur en imprégnant tout d'abord des granulés de carbure de silicium, ayant un diamètre moyen de 1 mm et une longueur de 5 mm et présentant une surface spécifique BET de 40 m²/g, à l'aide d'une quantité appropriée de nitrate de fer, en solution aqueuse, pour fournir la quantité désirée de fer dans le catalyseur résultant, puis en séchant le produit imprégné à 100°C et en calcinant le produit séché à 400°C et sous air pendant 2 heures. Dans une deuxième étape, on formait un précurseur sulfuré du catalyseur, en soumettant le précurseur oxydé, issu de la première étape, à une sulfuration par mise en contact dudit précurseur oxydé conjointement avec du soufre solide, mélangé mécaniquement au produit calciné et utilisé en quantité représentant 6,2% du poids dudit produit, et un courant de gaz renfermant H₂S ayant la composition du gaz à traiter, laquelle mise en contact était réalisée à une température de 300°C pendant 3 heures. Dans une troisième étape, on produisait le catalyseur en soumettant le précurseur sulfuré, issu de la deuxième étape, à un traitement oxydant par mise en contact dudit précurseur sulfuré, à une température de 400°C et pendant 2 heures, avec un courant gazeux oxygéné constitué d'air, pour former une phase active d'oxysulfure de fer sur le support de carbure de silicium.

Le gaz à traiter, introduit par le conduit d'amenée des gaz avec un débit de 42 Nm³/h et une température de 40°C, recevait par le piquage, avec un débit de 42 Nm3/h, une addition d'air à titre de gaz renfermant de l'oxygène libre, cet air étant injecté à température ambiante. Le mélange de gaz à.traiter et d'air, dans lequel le rapport molaire O₂:H₂S était égal à 5 (10 fois la stoechiométrie pour l'oxydation de l'H₂S en soufre), était amené à une température de 240°C, par passage dans le réchauffeur, puis injecté dans le réacteur maintenu à cette température. Le temps de contact TPN dudit mélange avec le catalyseur contenu dans le réacteur était égal à 4,3 secondes. L'effluent gazeux sortait du réacteur, par le conduit d'évacuation des gaz, avec une température de 240°C et était refroidi à environ 130°C dans le condenseur pour en séparer le soufre qu'il contenait.

Le taux de conversion de l'H₂S, égal à 100% dans les premières heures de fonctionnement, avait encore une valeur de 99% après 15 heures de fonctionnement. Le rendement en soufre, égal à 94% au début de l'opération, avait encore une valeur de 90% après 15 heures de fonctionnement.

### EXEMPLE 5 :

En faisant usage d'un dispositif analogue à celui employé dans l'exemple 1, on effectuait l'oxydation de l'H₂S présent dans un gaz renfermant, en volume, 1,7% d'H₂S, 18% d'H₂O et 80,3% d'azote, en opérant à une température de 210°C, avec utilisation d'un catalyseur consistant en carbure de silicium supportant une phase active comportant du fer sous la forme oxysulfure. Ledit catalyseur se présentait sous la forme de granulés ayant 1 mm de diamètre et 5 mm de longueur et une surface spécifique BET de 1 m²/g et il renfermait 5% de fer en poids.

Ledit catalyseur était obtenu comme décrit dans l'exemple 4, avec toutefois utilisation d'un support en carbure de silicium de surface spécifique égale à 2 m²/g et mise en oeuvre de l'étape de sulfuration pendant une durée de 5 heures et réalisation de la troisième étape à une température de 450°C.

Le gaz à traiter, introduit par le conduit d'amenée des gaz avec un débit de 60 Nm³/h et une température de 40°C, recevait par le piquage, avec un débit de 30 Nm³/h, une addition d'air à titre de gaz renfermant de l'oxygène libre, cet air étant injecté à température ambiante. Le mélange de gaz à traiter et d'air, dans lequel le rapporc molaire O₂:H₂S était égal à, 6 (12 fois la stoechiométrie pour l'oxydation de l'H₂S en soufre), était amené à une température de 210°C, par passage dans le réchauffeur, puis injecté dans le réacteur maintenu à cette température. Le temps de contact TPN dudit mélange avec le catalyseur contenu dans le réacteur était égal à 4 secondes. L'effluent gazeux sortait du réacteur, par le conduit d'évacuation des gaz, avec une température de 210°C et était ref roidi à environ 130°C dans le condenseur pour en séparer le soufre qu'il contenait.

Le taux de conversion de l'H₂S, égal à 100% après deux heures de fonctionnement, avait encore une valeur de 98% après 13 heures de fonctionnement. Le rendement en soufre se stabilisait à la valeur de 94% après deux heures de fonctionnement et conservait encore cette valeur après 13 heures de fonctionnement.

## Revendications

1. Procédé pour oxyder directement en soufre, par voie catalytique, l'H₂S contenu à faible teneur dans un gaz, lequel procédé est du type dans lequel on fait passer ledit gaz renfermant H₂S avec un gaz renfermant de l'oxygène libre, en quantité propre à fournir un rapport molaire O₂ : H₂S allant de 0,05 à 15, au contact d'un catalyseur d'oxydation sélective de l'H₂S en soufre, qui est constitué d'une phase catalytiquement active associée à un support à base de carbure de silicium et formée d'au moins un composé d'au moins un métal de transition, en opérant à des températures supérieures au point de rosée du soufre formé lors de l'oxydation de l'H₂S ,et il se **caractérise en ce que** la phase active du catalyseur est constituée d'au moins un oxysulfure d'au moins un métal choisi parmi fer, cuivre nickel, cobalt, chrome, molybdène et tungstène.

2. Procédé selon la revendication 1, **caractérisé en ce que** le métal, constituant, sous la forme oxysulfure, la phase active du catalyseur d'oxydation, est le fer ou un mélange de fer et d'au moins l'un des métaux cuivre, nickel, cobalt, chrome, molybdène ou tungstène, ledit mélange étant, de préférence, à majorité de fer.

3. Procédé selon la revendication 1 ou 2, **caractérisé en ce que** la réaction d'oxydation de l'H₂S en soufre est mise en oeuvre à des températures supérieures à 180°C et n'excédant pas 500°C.

4. Procédé selon la revendication 1 ou 2, **caractérisé en ce que** la réaction d'oxydation de l'H₂S en soufre est réalisée à des températures comprises entre 190°C et 300°C et plus spécialement entre 200°C et 260°C .

5. Procédé selon l'une des revendications 1 à 4, **caractérisé en ce que** le support en carbure de silicium du catalyseur d'oxydation constitue au moins 40 % et plus particulièrement au moins 50 % en poids dudit catalyseur.

6. Procédé selon l'une des revendications 1 à 5 **caractérisé en ce que** la phase active du catalyseur d'oxydation, comptée en poids de métal, représente 0,1% à 20%, plus particulièrement 0,2% à 15% et plus spécialement 0,2% à 7% du poids du catalyseur.

7. Procédé selon l'une des revendications 1 à 6, **caractérisé en ce que** la surface spécifique du catalyseur, déterminée par la méthode BET d'adsorption d'azote, prend des valeurs allant de 0,05 m²/g à 600 m²/g et plus spécialement de 0,1 m2/g à 400 m2/g.

8. Procédé selon l'une des revendications 1 à 7, **caractérisé en ce que** le gaz renfermant de l'oxygène libre est utilisé en quantité propre à fournir un rapport molaire O₂:H₂S allant de 0,1 à 10 et plus particulièrement de 2,5 à 8.

9. Procédé selon la revendication 8, **caractérisé en ce que** la réaction d'oxydation de l'H₂S en soufre est réalisée à des températures comprises entre 200°C et 260°C avec un rapport molaire O₂:H₂S allant de 3 à 7.

10. Procédé selon l'une des revendications 1 à 9, **caractérisé en ce que** les temps de contact du milieu réactionnel gazeux avec le catalyseur d'oxydation, dans les conditions normales de pression et de température, vont de 0,5 seconde à 20 secondes et de préférence de 1 seconde à 10 secondes.

11. Procédé selon l'une des revendications 1 à 10, **caractérisé en ce que** la teneur en H₂S du gaz à traiter est comprise entre 0,001% et 20% en volume et plus particulièrement entre 0,005% et 10% en volume, ladite teneur allant tout spécialement de 0,01% à 5% en volume.

12. Procédé selon l'une des revendications 1 à 11, **caractérisé en ce que** le catalyseur d'oxydation est obtenu en mettant en oeuvre un processus comportant :
- une première étape, dans laquelle on prépare un précurseur oxydé du catalyseur en réalisant tout d'abord une imprégnation d'un support en carbure de silicium au moyen d'une solution ou d'un sol du métal ou des métaux désiré(s) pour la phase active, sous la forme de sels , puis en séchant le support ainsi imprégné et en calcinant le produit séché à des températures allant de 250°C à 500°C, en opérant ou non en atmosphère inerte,
- une deuxième étape, dans laquelle on forme un précurseur sulfuré du catalyseur en soumettant le précurseur oxydé, issu de la première étape, à un traitement de sulfuration par mise en contact avec un agent sulfurant consistant en soufre élémentaire ou/et en un mélange gazeux d'H₂S et d'un gaz inerte, en opérant à des températures comprises entre 250°C et 500°C et pendant une durée suffisante pour effectuer une sulfuration maximale du métal ou des métaux de la phase active du catalyseur, et
- une troisième étape, dans laquelle on produit le catalyseur en mettant le précurseur sulfuré, issu de la deuxième étape, en contact, à des températures inférieures à 500°C et notamment comprises entre 250°C et 450°C et pendant une durée comprise entre 0,2 heure et 3 heures et plus spécialement entre 0,5 heure et 2 heures, avec un courant gazeux oxygéné constitué d'un gaz vecteur inerte renfermant, en volume dudit gaz inerte, 0,1% à 40% d'oxygène et 0% à 50% d'eau pour former la phase oxysulfure métallique.

13. Procédé selon la revendication 12, **caractérisé en ce que** l'oxydation de l'H₂S en soufre est réalisée dans une ou plusieurs zones de réaction et **en ce que** le catalyseur d'oxydation de l'H₂S est formé directement, dans chaque zone d'oxydation, comme opération préalable à la mise en oeuvre de l'oxydation de l'H₂S, en disposant dans chaque zone d'oxydation un précurseur oxydé du catalyseur, obtenu selon la première étape du processus de préparation, puis, par opération directe dans la zone d'oxydation, en soumettant le précurseur oxydé à un traitement de sulfuration pour produire un précurseur sulfuré et effectuant ensuite un traitement oxydant du précurseur sulfuré par un courant gazeux oxygéné pour former le catalyseur à phase oxysulfure, le traitement de sulfuration et le traitement oxydant étant réalisés respectivement selon la deuxième étape et la troisième étape du processus de préparation du catalyseur.

14. Procédé selon l'une des revendications 1 à 13, **caractérisé en ce que**, lorsque l'activité du catalyseur d'oxydation, au cours de la phase d'oxydation de l'H₂S, passe en dessous d'un seuil prédéterminé, on restaure l'efficacité dudit catalyseur en soumettant le catalyseur désactivé à un traitement oxydant, qui consiste à mettre ledit catalyseur désactivé en contact, à des températures inférieures à 500°C et notamment comprises entre 250°C et 450°C et pendant une durée comprise entre 0,2 heure et 3 heures et plus spécialement entre 0,5 heure et 2 heures; avec un courant gazeux oxygéné constitué d'un gaz vecteur inerte renfermant, en volume dudit gaz inerte, 0,1% à 40% d'oxygène et 0% à 50% d'eau pour reformer la phase oxysulfure métallique.

## Patentansprüche

1. Verfahren zur direkten, katalytischen Oxidation von H₂S, welches bei geringem Gehalt in einem Gas enthalten ist, zu Schwefel, wobei das Verfahren von dem Typ ist, bei dem das H₂S umfassende Gas mit einem freien Sauerstoff umfassenden Gas in einer Menge, die zum Bereitstellen eines molaren Verhältnisses O₂:H₂S von 0,05 bis 15 geeignet ist, zu einem Kontakt mit einem zur Oxidation von H₂S zu Schwefel selektiven Katalysator passieren gelassen wird, der aufgebaut ist aus einer katalytisch aktiven Phase, die mit einem Grundträger aus Siliziumkohlenstoff assoziiert ist und aus mindestens einer Verbindung von mindestens einem Übergangsmetall gebildet ist, im Betrieb bei Temperaturen über dem Taupunkt des aufgrund der Oxidation von H₂S gebildeten Schwefels, und welches **dadurch gekennzeichnet ist, daß** die aktive Phase des Katalysators aus mindestens einem Oxysulfid von mindestens einem Metall aufgebaut ist, welches unter Eisen, Kupfer, Nickel, Kobalt, Chrom, Molybdän und Wolfram ausgewählt wurde.

2. Verfahren gemäß Anspruch 1, **dadurch gekennzeichnet, daß** das Metall, welches in der Form des Oxysulfids die aktive Phase des Oxidationskatalysators aufbaut, Eisen oder eine Mischung von Eisen und mindestens einem der Metalle Kupfer, Nickel, Kobalt, Chrom, Molybdän oder Wolfram ist, wobei die Mischung vorzugsweise hauptsächlich aus Eisen ist.

3. Verfahren gemäß Anspruch 1 oder 2, **dadurch gekennzeichnet, daß** die Oxidation von H₂S zu Schwefel bei Temperaturen von über 180°C und 500°C nicht übersteigend durchgeführt wird.

4. Verfahren gemäß Anspruch 1 oder 2, **dadurch gekennzeichnet, daß** die Oxidationsreaktion von H₂S zu Schwefel bei Temperaturen zwischen 190°C und 300°C und insbesondere zwischen 200°C und 260°C realisiert wird.

5. Verfahren gemäß einem der Ansprüche 1 bis 4, **dadurch gekennzeichnet, daß** der Träger aus Siliziumkohlenstoff des Oxidationskatalysators mindestens 40 Gew.-% und insbesondere mindestens 50 Gew.-% des Katalysators aufbaut.

6. Verfahren gemäß einem der Ansprüche 1 bis 5, **dadurch gekennzeichnet, daß** die aktive Phase des Oxidationskatalysators, gerechnet als Gewicht des Metalls, 0,1 % bis 20 %, vorzugsweise 0,2 % bis 15 % und insbesondere 0,2 % bis 7 % des Gewichts des Katalysators wiedergibt.

7. Verfahren gemäß einem der Ansprüche 1 bis 6, **dadurch gekennzeichnet, daß** die spezifische Oberfläche des Katalysators, bestimmt nach der BET-Stickstoffadsorptionsmethode, Werte annimmt, die von 0,05 m²/g bis 600 m²/g und insbesondere von 0,1 m²/g bis 400 m²/g laufen.

8. Verfahren gemäß einem der Ansprüche 1 bis 7, **dadurch gekennzeichnet, daß** das den freien Sauerstoff umfassende Gas in einer Menge verwendet wird, die geeignet ist, ein molares Verhältnis O₂:H₂S zu liefern, welches von 0,1 bis 10 und insbesondere von 2,5 bis 8 läuft.

9. Verfahren gemäß Anspruch 8, **dadurch gekennzeichnet, daß** die Oxidationsreaktion von H₂S zu Schwefel bei Temperaturen von zwischen 200°C und 260°C mit einem molaren Verhältnis O₂:H₂S von 3 bis 7 realisiert wird.

10. Verfahren gemäß einem der Ansprüche 1 bis 9, **dadurch gekennzeichnet, daß** die Kontaktzeit des gasförmigen Reaktionsmediums mit dem Oxidationskatalysator, bei normalen Bedingungen des Drucks und der Temperatur, von 0,5 Sekunden bis 20 Sekunden und vorzugsweise von 1 Sekunde bis 10 Sekunden geht.

11. Verfahren gemäß einem der Ansprüche 1 bis 10, **dadurch gekennzeichnet, daß** der Gehalt an H₂S des zu behandelnden Gases zwischen 0,001 Vol.-% und 20 Vol.-% und insbesondere zwischen 0,005 Vol.-% und 10 Vol.-% liegt, wobei der Gehalt vor allem von 0,01 Vol.-% bis 5 Vol.-% läuft.

12. Verfahren gemäß einem der Ansprüche 1 bis 11, **dadurch gekennzeichnet, daß** der Oxidationskatalysator erhalten wurde durch Durchführen eines Prozesses, der beinhaltet:
- einen ersten Schritt, in dem ein oxidierter Vorläufer des Katalysators hergestellt wird, indem zuerst eine Imprägnierung des Trägers aus Siliziumkohlenstoff mittels einer Lösung oder eines Sols des für die aktive Phase gewünschten Metalls oder der gewünschten Metalle in Form von Salzen durchgeführt wird, dann der so imprägnierte Träger getrocknet wird und das getrocknete Produkt bei Temperaturen von 250°C bis 500°C, eine inerte Atmosphäre betreibend oder nicht, kalziniert wird,
- einen zweiten Schritt, in dem ein sulfidierter Vorläufer des Katalysators gebildet wird, indem der oxidierte Vorläufer, der aus dem ersten Schritt gewonnen wurde, einer Sulfidierungsbehandlung unterzogen wird durch Kontaktieren mit einem Sulfidierungsmittel, das aus elementarem Schwefel und/oder einer Gasmischung von H₂S und einem inerten Gas besteht, bei Temperaturen von zwischen einschließlich 250°C und 500°C und während einer Dauer, die ausreicht, eine maximale Sulfidierung des Metalls oder der Metalle der aktiven Phase des Katalysators zu bewirken, und
- einen dritten Schritt, in dem der Katalysator hergestellt wird, indem der sulfidierte Vorläufer, der aus dem zweiten Schritt gewonnen wurde, bei Temperaturen von weniger als 500°C und insbesondere zwischen einschließlich 250°C und 450°C und während einer Dauer von zwischen einschließlich 0,2 Stunden und 3 Stunden und insbesondere zwischen 0,5 Stunden und 2 Stunden mit einem oxygenierten Gasstrom in Kontakt gebracht wird, der aus einem inerten Trägergas, der, in Volumen des besagten inerten Gases, 0,1% bis 40% Sauerstoff und 0% bis 50% Wasser umfaßt, aufgebaut ist, um die metallische Oxysulfidphase zu bilden.

13. Verfahren gemäß Anspruch 12, **dadurch gekennzeichnet, daß** die Oxidation von H₂S zu Schwefel in einer oder mehreren Reaktionszonen durchgeführt wird, und daß der Katalysator zur Oxidation von H₂S als Operation vor dem Durchführen der Oxidation von H₂S in jeder Oxidationszone direkt gebildet wird, indem in jeder Oxidationszone ein oxidierter Vorläufer des Katalysators, der gemäß dem ersten Schritt des Herstellungsprozesses erhalten wurde, bereitgestellt wird, dann, durch direkten Betrieb in der Oxidationszone, der oxidierte Vorläufer einer Sulfidierungsbehandlung zum Erzeugen eines sulfidierten Vorläufers unterzogen wird und anschließend eine Oxidationsbehandlung des sulfidierten Vorläufers durch einen oxygenierten Gasstrom zum Bilden des Oxysulfidphasenkatalysators bewirkt wird, wobei die Sulfidierungsbehandlung und die Oxidationsbehandlung jeweils gemäß dem zweiten Schritt und dem dritten Schritt des Prozesses der Herstellung des Katalysators bewirkt werden.

14. Verfahren gemäß einem der Ansprüche 1 bis 13, **dadurch gekennzeichnet, daß**, wenn die Aktivität des Oxidationskatalysators im Verlauf der Phase der Oxidation von H₂S unter eine vorbestimmte Schwelle fällt, die Wirksamkeit des Katalysators wiedergewonnen wird, indem der deaktivierte Katalysator einer Oxidationsbehandlung unterzogen wird, die aus einem Kontaktieren des deaktivierten Katalysators, bei Temperaturen von weniger als 500°C und speziell zwischen einschließlich 250°C und 450°C und während einer Dauer von zwischen 0,2 Stunden und 3 Stunden und insbesondere zwischen 0,5 Stunden und 2 Stunden, mit einem oxygenierten Gasstrom besteht, der aus einem inerten Trägergas, der in Volumen des inerten Gases 0,1% bis 40% Sauerstoff und 0% bis 50% Wasser umfaßt, aufgebaut ist, um die metallische Oxysulfidphase rückzubilden.

## Claims

1. Process for oxidizing the H₂S contained at low concentration in a gas directly to sulphur by catalytic means, which process is of the type in which the said H₂S-containing gas with a gas containing free oxygen, in a suitable amount so as to give an O₂/H₂S molar ratio ranging from 0.05 to 15, is brought into contact with a catalyst for the selective oxidation of H₂S to sulphur, which consists of a catalytically active phase combined with a silicon carbide-based support and formed from at least one compound of at least one transition metal, the process being carried out at temperatures above the dew point of the sulphur formed during the H₂S oxidation, and it is **characterized in that** the active phase of the catalyst consists of at least one oxysulphide of at least one metal chosen from iron, copper, nickel, cobalt, chromium, molybdenum and tungsten.

2. Process according to Claim 1, **characterized in that** the metal constituting, in the oxysulphide form, the active phase of the oxidation catalyst is iron or a mixture of iron and of at least one of the metals copper, nickel, cobalt, chromium, molybdenum and tungsten, the said mixture preferably being mostly iron.

3. Process according to Claim 1 or 2, **characterized in that** the H₂S-to-sulphur oxidation reaction is carried out at temperatures above 180°C but not exceeding 500°C.

4. Process according to Claim 1 or 2, **characterized in that** the H₂S-to-sulphur oxidation reaction is carried out at temperatures of between 190°C and 300°C and more especially between 200°C and 260°C.

5. Process according to one of Claims 1 to 4, **characterized in that** the silicon carbide support of the oxidation catalyst forms at least 40% and more particularly at least 50% by weight of the said catalyst.

6. Process according to one of Claims 1 to 5, **characterized in that** the active phase of the oxidation catalyst, measured by weight of metal, represents from 0.1% to 20%, more particularly from 0.2% to 15% and more especially from 0.2% to 7% of the weight of the catalyst.

7. Process according to one of Claims 1 to 6, **characterized in that** the specific surface area of the catalyst, determined by the BET nitrogen adsorption method, takes values ranging from 0.05 m²/g to 600 m²/g and more especially from 0.1 m²/g to 400 m²/g.

8. Process according to one of Claims 1 to 7, **characterized in that** the gas containing free oxygen is used in an amount suitable for giving an O₂/H₂S molar ratio ranging from 0.1 to 10 and more particularly from 2.5 to 8.

9. Process according to Claim 8, **characterized in that** the H₂S-to-sulphur oxidation reaction is carried out at temperatures of between 200°C and 260°C with an O₂/H₂S molar ratio ranging from 3 to 7.

10. Process according to one of Claims 1 to 9, **characterized in that** the contact times during which the gaseous reaction mixture is in contact with the oxidation catalyst, under standard temperature and pressure conditions, range from 0.5 to 20 seconds and preferably from 1 to 10 seconds.

11. Process according to one of Claims 1 to 10, **characterized in that** the H₂S content of the gas to be treated is between 0.001% and 20% by volume and more particularly between 0.005% and 10% by volume, the said content ranging most particularly from 0.01% to 5% by volume.

12. Process according to one of Claims 1 to 11, **characterized in that** the oxidation catalyst is obtained by carrying out a process comprising:
- a first step, in which an oxidized precursor of the catalyst is prepared by firstly impregnating a silicon carbide support by means of a solution or of a sol of the metal or metals desired for the active phase, in the form of salts, then by drying the support thus impregnated and by calcining the dried product at temperatures ranging from 250°C to 500°C, which calcining may or may not be carried out in an inert atmosphere;
- a second step, in which a sulphurized precursor of the catalyst is formed by subjecting the oxidized precursor from the first step to a sulphurization treatment by bringing it into contact with a sulphurizing agent consisting of elemental sulphur and/or of a gas mixture consisting of H₂S and of an inert gas, which treatment is carried out at temperatures of between 250°C and 500°C and for a time long enough to achieve maximum sulphurization of the metal or metals of the active phase of the catalyst; and
- a third step, in which the catalyst is produced by bringing the sulphurized precursor from the second step into contact, at temperatures below 500°C and especially between 250°C and 450°C and for a time of between 0.2 and 3 hours and more especially between 0.5 and 2 hours, with an oxygen-containing gas stream consisting of an inert carrier gas containing, in terms cf the volume of the said inert gas, from 0.1% to 40% oxygen and from 0% to 50% water by volume, in order to form the metal oxysulphide phase.

13. Process according to Claim 12, **characterized in that** the H₂S-to-sulphur oxidation is carried out in one or more reaction zones and **in that** the H₂S oxidation catalyst is formed directly, in each oxidation zone, as an operation prior to the H₂S oxidation operation, by placing in each oxidation zone an oxidized precursor of the catalyst, obtained according to the first step of the preparation process, then by a direct operation in the oxidation zone by subjecting the oxidized precursor to a sulphurization treatment in order to produce a sulphurized precursor and then carrying out an oxidizing treatment on the sulphurized precursor using an oxygen-containing gas stream in order to form the catalyst with an oxysulphide phase, the sulphurization treatment and the oxidizing treatment being carried out in the second and third steps of the catalyst preparation process, respectively.

14. Process according to one of Claims 1 to 13, **characterized in that**, when the activity of the oxidation catalyst, during the H₂S oxidation phase, falls below a predetermined threshold, the efficiency of the said catalyst is restored by subjecting the deactivated catalyst to an oxidizing treatment which consists in bringing the said deactivated catalyst into contact, at temperatures below 500°C and especially between 250°C and 450°C and for a duration of between 0.2 and 3 hours and more especially between 0.5 and 2 hours, with an oxygen-containing gas stream consisting of an inert carrier gas containing, by volume of the said inert gas, from 0.1% to 40% oxygen and from 0% to 50% water in order to form the metal oxysulphide phase.
